# NEUE EUROPÄISCHE PATENTSCHRIFT

(11) **EP 0 163 846 B2**
(45) Veröffentlichungstag und Bekanntmachung des Hinweises auf die Entscheidung über den Einspruch: **24.02.1993**
(45) Hinweis auf die Patenterteilung: 20.07.1988
(21) Anmeldenummer: 85104119.4
(22) Anmeldetag: 04.04.1985
(51) Int. Cl.: G01F 1/68

(54) **Vorrichtung zur Messung der Masse eines strömenden Mediums**
Device for measuring the mass of a flowing medium
Dispositif pour mesurer la masse d'un milieu en écoulement

(30) Priorität: 10.05.1984 DE 3417305
(43) Veröffentlichungstag der Anmeldung: 11.12.1985
(73) Patentinhaber: ROBERT BOSCH GMBH, 70442 Stuttgart (DE)
(72) Erfinder: Sumal, Jaihind Singh, D-7143 Vaihingen-Ensingen (DE)

(56) Entgegenhaltungen:
- DE-A- 2 753 118
- DE-A- 2 900 220
- DE-A- 2 919 433
- US-A- 4 357 830
- E. Truckenbrodt, Strömungsmechanik, Grundlagen und technische Anwendungen, Springer-Verlag 1968, Seiten 447,448
- W. Schäfer, Neuer thermischer Massendurchflussmesser für Gase, Vorabdruck aus "Regelungstechnische Praxis" 25 (1983), Heft 11

## Beschreibung

### Stand der Technik

Die Erfindung geht aus von einer Vorrichtung nach der Gattung des Hauptanspruchs. Es ist schon eine Vorrichtung bekannt (DE-AI-2 753 118), bei der stromaufwärts eines ersten Trägers mit einer Meßwiderstandsschicht fluchtend ein zweiter Träger mit einer zweiten Widerstandsschicht in einem Parallelen Abschnitt eines Strömungskanals angeordnet ist. Dadurch wird zwar versucht zu vermeiden, daß sich an der stromaufwärts gerichteten Fläche des ersten Trägers mit der Meßwiderstandsschicht Schmutzablagerungen bilden, die zu einer Veränderung der Kennlinie der Meßwiderstandsschicht führen, jedoch ist bei einer derartigen Anordnung der Nachteil gegeben, daß bei geringen Lageänderungen des zweiten Trägers die Strömung um den ersten Träger sehr stark geändert wird und sich dabei ebenfalls das Meßsignal der Meßwiderstandsschicht in unerwünschter Weise stark verändert.

### Vorteile der Erfindung

Die erfindungsgemäße Vorrichtung mit den Merkmalen des selbständigen Anspruche hat demgegenüber den Vorteil, daß Lageänderungen des zweiten Trägers im Strömungskanal höchstens zu einer vernachlässigbar geringen Beeinflussung des durch die Meßwiderstandsschicht gelieferten Meßsignales führen.

Durch die in dem Unteranspruch aufgeführten Maßnahmen sind vorteilhafte Weiterbildungen und Verbesserungen der im selbständigen Anspruch angegebenen Vorrichtung möglich.

### Zeichnung

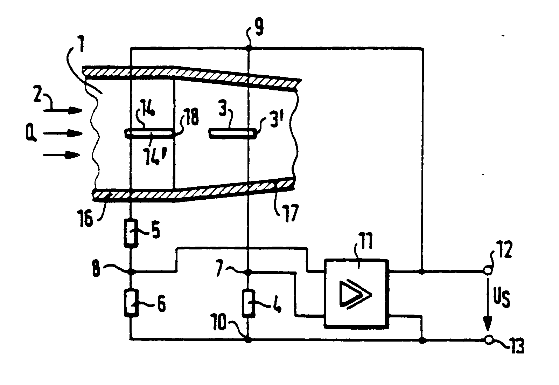

Ein Ausführungsbeispiel der Erfindung ist in der Zeichnung vereinfacht dargestellt und in der nachfolgenden Beschreibung näher erläutert.

Beschreibung des Ausführungsbeispieles in der Zeichnung ist mit 1 ein Strömungskanal, beispielsweise ein Luftansaugrohr einer nicht dargestellten Brennkraftmaschine, gezeigt, durch welchen in Richtung der Pfeile 2 ein Medium, beispielsweise die von der Brennkraftmaschine angesaugte Luft strömt. In dem Strömungskanal 1 befindet sich beispielsweise als Teil eines Durchflußmeßorgans eine temperaturabhängige Meßwiderstandsschicht 3, z. B. ein Heißschicht-bzw. Heißfilmwiderstand, die auf einem ersten Träger 3' aufgebracht ist und von der Ausgangsgröße eines Reglers durchflossen wird und gleichzeitig die Eingangsgröße für den Regler liefert Die Temperatur der temperaturabhängigen Meßwiderstandsschicht 3 wird von dem Regler auf einen festen Wert, der über der mittleren Mediumtemperatur liegt, eingeregelt. Nimmt nun die Strömungsgeschwindigkeit, d.h. die pro

Zeiteinheit fließende Mediummasse mit einem Durchflußvert Q zu, so kühlt sich die temperaturabhängige Meßwiderstandsschicht 3 stärker ab. Diese Abkühlung wird an den Eingang des Reglers zurückgemeldet, so daß dieser seine Ausgangsgröße so erhöht, daß sich wiederum der festgelegte Temperaturwert an der temperaturabhängigen Meßwiderstandsschicht 3 einstellt. Die Ausgangsgröße des Reglers regelt die Temperatur der temperaturabhängigen Meßwiderstandsschicht 3 bei Änderungen des Durchflußwertes Q des Mediums jeweils auf den vorbestimmten Wert ein und stellt gleichzeitig ein Maß für die strömende Mediummasse dar, das als Durchflußmeßwert Uₛ beispielsweise einem Zumeßkreis einer Brennkraftmaschine zur Anpassung der erforderlichen Kraftstoffmasse an die pro Zeiteinheit angesaugte Luftmasse zugeführt werden kann. Der erste Träger 3' hat in Strömungsrichtung einen etwa rechteckförmigen Querschnitt und verläuft insbesondere parallel zur Strömungsrichtung.

Die temperaturabhängige Meßwiderstandsschicht 3 ist in einer Widerstandsmeßschaltung, beispielsweise einer Brückenschaltung, angeordnet und bildet mit einem Widerstand 4 zusammen einen ersten Brückenzweig, dem ein aus den beiden festen Widerständen 5 und 6 aufgebauter zweiter Brückenzweig parallel geschaltet ist. Zwischen den Widerständen 3 und 4 befindet sich derAbgriffspunkt 7 und zwischen den Widerständen 5 und 6 der Abgriffspunkt 8. Die beiden Brückenzweige sind in den Punkten 9 und 10 parallel geschaltet. Die zwischen den Punkten 7 und 8 auftretende Diagonalspannung der Brücke ist dem Eingang eines Verstärkers 11 zugeleitet, an dessen Ausgangsklemmen die Punkte 9 und 10 angeschlossen sind, so daß seine Ausgangsgröße die Brücke mit Betriebsspannung bzw. mit Betriebsstrom versorgt. Der gleichzeitig als Stellgröße dienende Durchflußmeßwert Uₛ ist zwischen den Klemmen 12 und 13 abnehmbar, wie angedeutet.

Die temperaturabhängige Meßwiderstandsschicht 3 wird durch den ihn durchfließenden Strom aufgeheizt bis zu einem Wert, bei dem die Eingangsspannung des Verstärkers 11, die Brückendiagonalspannung, Null wird oder einen vorgegebenen Wert annimmt. Aus dem Ausgang des Verstärkers fließt dabei ein bestimmter Strom in die Brückenschaltung. Verändert sich infolge von Massenänderungen Q des strömenden Mediums die Temperatur der temperaturabhängigen Meßwiderstandsschicht 3, so ändert sich die Spannung an der Brückendiagonale und der Verstärker 11 regelt die Brückenspeisespannung bzw. den Brückenstrom auf einen Wert, für den die Brücke wieder abgeglichen oder in vorgegebener Weise verstimmt ist Die Ausgangsgröße des Verstärkers 11, die Stellgröße Uₛ, stellt ebenso wie der Strom in der temperäturabhängigen Meßwiderstandsschicht 3 einen Durchflußmeßwert für die strömende Mediummasse dar, beispielsweise der von einer Brennkraftmaschine angesaugten Luftmasse.

Zur Kompensation des Einflusses der Temperatur des Mediums auf das Meßergebnis ist es zweckmäßig, einen von dem Medium umströmten zweiten temperaturabhängigen Widerstand, die Kompensationswiderstandsschicht 14, in den zweiten Brückenzweig zu schalten. Dabei ist die Größe der Widerstände 5, 6 und 14 so zu wählen, daß die Verlustleistung der Kompensationswiderstandsschicht 14, die durch den ihn durchfliessenden Zweigstrom erzeugt wird, so gering ist, daß sich die Temperatur dieses Widerstandes 14 praktisch nicht mit den Änderungen der Brückenspannung verändert, sondern stets der Temperatur des vorbei strömenden Mediums entspricht.

Die Kompensationswiderstandsschicht 14 ist auf einem zweiten Träger 14' aufgebracht, der in Strömungsrichtung einen etwa rechteckförmigen Querschnitt hat und vorzugsweise parallel zur Strömungsrichtung verläuft. Um zu vermeiden, daß sich an der der Strömung entgeyengerichteten Stirnfläche des ersten Trägers 3' mit der Meßwiderstandsschicht 3 Ablagerungen aufbauen und damit den Durchflußmeßwert Uₛ verfälschen, ist stromaufwärts des ersten Trägers 3' und fluchtend mit diesem der zweite Träger 14' im Strömungskanal 1 angeordnet. Erster Träger 3' und zweiter Träger 14' sind insbesondere aus elektrisch nicht leitendem Material, beispielsweise Keramik gefertigt. Der Querschnitt des zweiten Trägers 14' mit der Kompensationswiderstandsschicht 14 quer zur Strömungsrichtung 2 soll dabei mindestens gleich dem Querschnitt des ersten Trägers 3' mit der Meßwiderstandsschicht 3 quer zur Strömungsrichtung 2 sein. Um eine Empfindlichkeit des durch die Meßwiderstandsschicht 3 bestimmten Durchflußmeßwertes Uₛ in Abhängigkeit von der Lage des zweiten Trägers 14' im Strömungskanal zu vermeiden, weist erfindungsgemäß der Strömungskanal 1 einen parallelen Abschnitt 16 und stromabwärts sich an diesen anschließend einen konvergierenden abschnitt 17 auf und ist der zweite Träger 14' mit der Kompensationswiderstandsschicht 14 in dem parallelen Abschnitt 16 und der erste Träger 3'mit der Meßwiderstandsschicht 3 in dem konvergierenden Abschnitt 17 angeordnet. Vorteilhafterweise ist dabei der zweite Träger 14' so im parallelen Abschnitt 16 angeordnet, daß etwa mit seinem der Strömung abgewandten Ende 18 der parallele Abschnitt 16 endet und der konvergiererde Abschnitt 17 beginnt.

## Patentansprüche

1. Vorrichtung zur Messung des Durchflusses eines strömenden Mediums, inbesondere zur Messung des Ansaugluftflusses von Brennkraftmaschinen, mit einer in einem Strömungskanal (1) auf einem ersten Träger (3') etwa rechteckförmigen Querschnittes, vorzugsweise parallel zur Strömungsrichtung aufgebrachten Meßwiderstandsschicht (3) und einer ebenfalls in dem Strömungskanal auf einem stromaufwärts und fluchtend zur Vermeidung von Ablagerungen an der der Mediumströmung entgegengerichteten stirnfläche des ersten Trägers (3') angeordneten zweiten Träger (14') etwa rechteckförmigen Querschnittes vorzugsweise parallel zur Strömungsrichtung aufgebrachten zweiten Widerstandsschicht (14), wobei der Strömungskanal (1) einen parallelen Abschnitt (16) und einen sich in Strömungsrichtung anschließenden konvergierenden Abschnitt (17) hat und der zweite Träger (14') mit der als Kompensationswiderstand dienenden zweiten Widerstandsschicht (14) in dem parallelen Abschnitt (16) des Strömungskanales (1) angeordnet ist, während der erste Träger (3') mit der Meßwiderstandsschicht (3) in dem konvergierenden Abschnitt (17) des Strömungskanales (1) liegt und wobei der Querschnitt des zweiten Trägers (14') mit der Kompensationswiderstandsschicht (14) quer zur Strömungsrichtung (2) mindestens gleich dem Querschnitt des ersten Trägers (3') mit der Meßwiderstandsschicht (3) quer zur Strömungsrichtung (2) ist.

2. Vorrichtung nach Anspruch 1, dadurch gekennzeichnet, daß der zweite Träger (14') so im parallelen Abschnitt (16) des Strömungskanales (1) angeordnet ist, daß etwa mit seinem der Strömung abgewandten Ende (18) der parallele Abschnitt (16) endet.

## Claims

1. Device for measuring the flow of a flowing medium, in particular for measuring the intake air flow of internal-combustion engines, with a measuring resistance layer (3) applied in a flow channel (1) on a first carrier (3') of approximately rectangular cross-section, preferably in parallel to the flow direction, and a second resistance layer (14), likewise applied in the flow channel on a second carrier (14'), arranged upstream and in alignment to avoid deposits on the end face of the first carrier (3') which faces in the opposite direction to the medium flow, of approximately rectangular cross-section, preferably in parallel to the flow direction, the flow channel (1) having a parallel section (16) and a converging section (17) adjoining in flow direction, and the second carrier (14') being arranged with the second resistance layer (14), serving as compensation resistance, in the parallel section (16) of the flow channel (1), while the first carrier (3') with the measuring resistance layer (3) lies in the converging section (17) of the flow channel (1), the cross-section of the second carrier (14') with the compensation resistance layer (14), transverse to the flow direction (2) being at least equal to the cross-section of the first carrier (3') with the measuring resistance layer (3) transverse to the flow direction (2).

2. Device according to Claim 1, characterised in that the second carrier (14') is arranged in the parallel section (16) of the flow channel (1), such that the parallel section (16) ends approximately with its end (18) facing away from the flow.

## Revendications

1. Dispositif pour mesurer le débit d'un milieu en écoulement, notamment pour mesurer le flux d'air aspiré par un moteur à combustion interne, dispositif comportant une couche résistante de mesure (3), placée de préférence parallèlement à la direction de l'écoulement dans un canal d'écoulement (1) sur un premier support (3') de section transversale à peu près rectangulaire, et une seconde couche résistante (14) placée de préférence parallèlement à la direction de l'écoulement dans le canal d'écoulement sur un second support (14') de section transversale à peu près rectangulaire, disposé en amont et en alignement pour éviter des dépôts sur la surface frontale, orientée contre l'écoulement, du premier support (3'), tandis que le canal d'écoulement (1) a une section parallèle (16) et une section convergente (17) s'y raccordant dans le sens de l'écoulement et le second support (14') avec la seconde couche résistante (14), jouant le rôle de résistance de compensation, est disposé dans la section parallèle (16) du canal d'écoulement (1), tandis que le premier support (3') avec la couche résistante de mesure (3) est placé dans la section convergente (17) du canal d'écoulement (1), et la section transversale du second support (14') avec la couche résistante de compensation (14) est au moins égale, transversalement à la direction de l'écoulement, à la section transversale du premier support (3') avec la couche résistante de mesure (3), transversalement à la direction de l'écoulement (2).

2. Dispositif selon la revendication 1, caractérisé en ce que le second support (14') est disposé de façon telle dans la section parallèle (16) du canal d'écoulement (1), que la section parallèle (16) se termine à peu près à l'extrémité (18), située en aval dans le sens de l'écoulement, de ce support.
